Europäisches Patentamt

European Patent Office

Office européen des brevets

(11) Publication number: 0 320 027 A2

# EUROPEAN PATENT APPLICATION

(21) Application number: 88202252.8

(51) Int. Cl.4: B23Q 3/10

(22) Date of filing: 10.10.88

(30) Priority: 10.12.87 IT 2293287

(43) Date of publication of application:
14.06.89 Bulletin 89/24

(84) Designated Contracting States:
AT BE CH DE ES FR GB IT LI NL SE

(71) Applicant: SZ S.R.L.
Strada della Favorita
I-36040 Sarego (Vicenza)(IT)

(72) Inventor: Salvagnini, Guido
Via dalla Prà
I-36040 Sarego (Vicenza)(IT)

(74) Representative: Marchi, Massimo et al
c/o Marchi & Mittler s.r.l. Viale Lombardia 20
I-20131 Milano(IT)

(54) Pallet with adjustable anchorage system for equipping the clamping fixture of a rough piece to be machined with machine tools.

(57) The pallet comprises one or more supporting faces (3), each of which is provided with an anchorage system for equipping the clamping fixture of a rough piece (61) to be machined with machine tools. Each supporting face (3) has a plurality of anchorage means (4) for components (29, 30, 82) of said clamping fixture. Each anchorage means (4) may be adjusted as to height and as to angular orientation and is connected with a supply of fluid.

Said adjustment is carried out by screwing and unscrewing said anchorage means (4) in corresponding appropriately threaded holes (5) in the supporting faces of the pallet.

Fig.1

# Pallet with adjustable anchorage system for equipping the clamping fixture of a rough piece to be machined with machine tools.

The present invention refers to a pallet with an adjustable anchorage system for equipping the clamping fixture of a rough piece to be machined with machine tools.

In the field of machine tools pallets are those plates on which the pieces to be machined are clamped with appropriate fixtures and which are moved from one or more off stations to one or more machining, washing or measurement stations.

The known pallets have one or more supporting faces equipped with a plurality of threaded holes or grooves in which fixtures are directly engaged which can clamp on the pallet the rough pieces to be processed in different machining operations. Since such rough pieces have variable dimensions, it is necessary to have a tool store equipped with several sets of different dimensions so that, as occasion arises, those tools may be selected which are appropriate for clamping a given rough piece on the pallet; or it is necessary to design and manufacture specific fixtures. As a consequence, the cost of the clamping fixture is always high. In addition, the threaded holes of the known pallets are blind and the object of bolting of the fixtures onto these holes is merely to position them firmly but not to connect them to a supply of fluid for the operation of the fixtures.

In view of this state of the art, the main object of the present invention is to accomplish a pallet which eliminates the need to design specific fixtures and reduces the requirement of a tool store with many sets of fixtures, being itself adaptable as occasion demands to the dimensions of the rough piece to be clamped.

A further object of the present invention is to also accomplish a pallet whose anchorage means are connected together and themselves connect the fixture's components to a supply of fluid, so that the fastening of the components to the respective anchorage means involves a hydraulic connection for the operation of these components, finalized to the clamping of the piece to be machined.

According to the invention, such main object is attained by accomplishing a pallet for equipping the clamping fixture of a rough piece to be machined with machine tools, comprising one or more supporting faces equipped with threaded holes, characterized in that respective anchorage means adjustable in height and angular orientation for components of said clamping fixture are permanently inserted in said threaded holes.

In this way said anchorage means may protrude from the respective face of the pallet by a length which is adjustable in relation to the thickness or height of the rough piece to be clamped and they may also be angularly oriented for a correct positioning of the components of the clamping fixture.

Such adjustments are carried out by tightening or loosening the anchorage means in the respective threaded holes of the pallet's supporting faces.

With this arrangement, since the adjustment for height and angular orientation is carried out directly as part of the set-up of the pallet's clamping means, the components of the clamping fixture may be modular elements with a standard height and their number in the tool store can be reduced substantially, and the need for designing specific fixtures for the individual pieces is also avoided.

According to one preferred embodiment of the present invention there is also the possibility that the above anchorage means have passing coaxial holes through them in constant communication with a supply of fluid and closed, when required, by removable sealing plugs. In this way the anchorage means are in a position of also ensuring the hydraulic connection of the components fastened to them with the operating fluid of the components themselves.

One possible embodiment of the present invention is illustrated, as a non-limiting example, in the enclosed drawings, in which:

Fig. 1 is a perspective view of a pallet according to the invention;

Fig. 2 is a cross-sectional view taken along the line II-II of Fig. 3 of an anchorage means included in the above pallet;

Fig. 3 is a plan view of the above anchorage means;

Fig. 4 is a cross-sectional view of the entire pallet taken along the line IV-IV of Fig. 2;

Fig. 5 is a cross-sectional view taken along the line V-V of Fig. 6 of a plug for the anchorage means illustrated in Fig.s 2 and 3;

Fig. 6 is a plan view of the plug of Fig. 5;

Fig. 7 is a view of the equipped pallet on which modular elements are anchored which hold a rough piece to be machined;

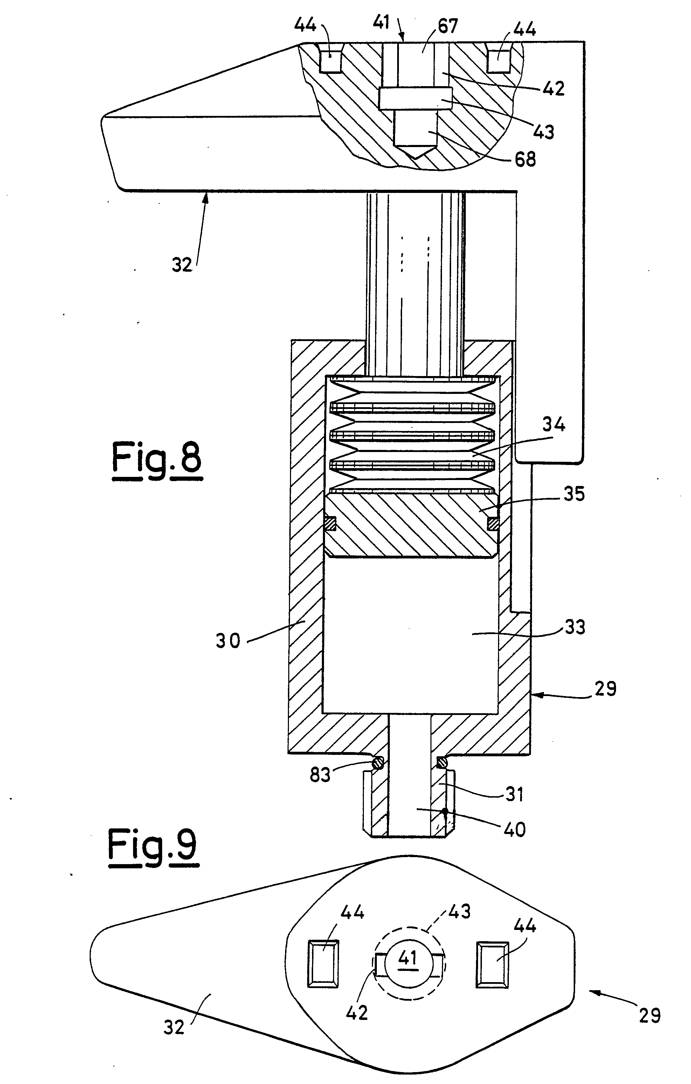

Fig. 8 is a lateral partially cross-sectional view of a modular clamping element;

Fig. 9 is a plan view of the element of Fig. 8;

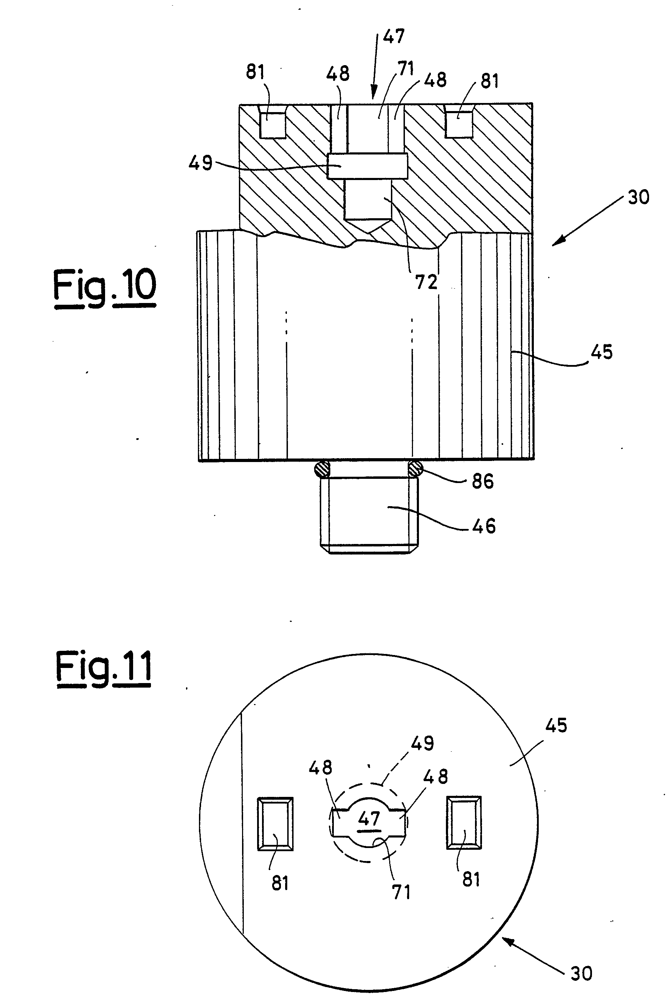

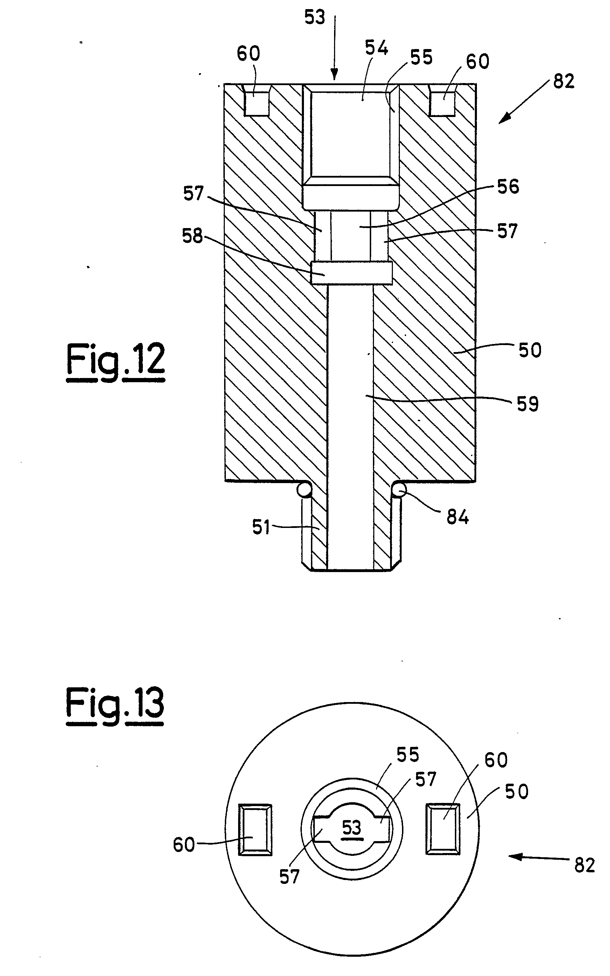

Fig. 10 is a lateral partially cross-sectional view of a modular positioning element;

Fig. 11 is a plan view of the element of Fig. 10;

Fig.s 12 and 13 are an axial cross-sectional view and a plan view respectively of an intermediate modular element.

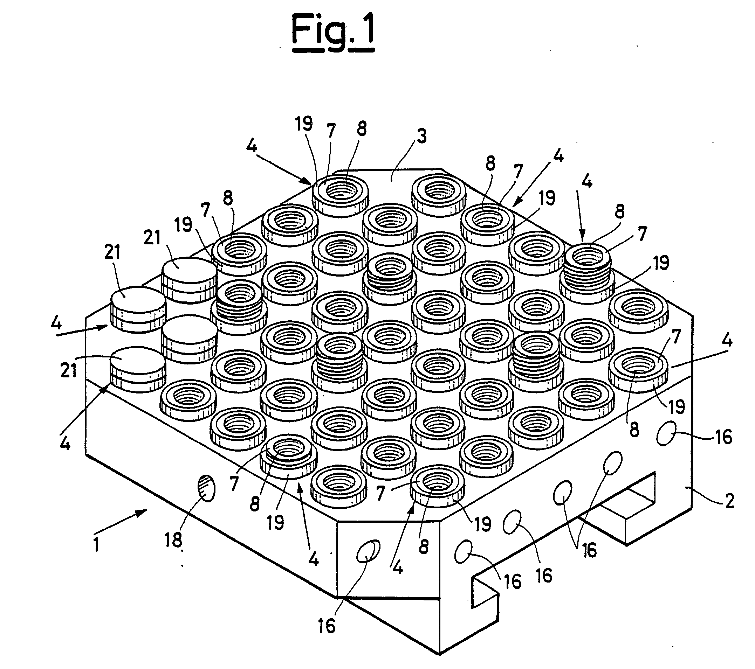

The pallet illustrated as an example in the drawings, where it is globally indicated with the numerical reference 1 (Fig. 1), comprises a base 2 with a standardized shape which can slide on conveyor guides (not shown) and which can be accurately fastened on the table of a machine tool, and at least one supporting face 3 equipped with a plurality of anchorage means 4. For the sake of simplicity a pallet is shown with only one supporting face, it being, however, obvious that the present invention is applicable to a pallet with two or five supporting faces, constituted by a vertical plate constrained to a horizontal cursor and by a parallelepiped constrained to a horizontal cursor, respectively.

As shown in Fig.s 2 and 3, each anchorage means 4 is inserted in the pallet body by screwing. For this purpose holes 5 are appropriately distributed in the pallet body with an upper threaded part 70 and the anchorage means 4 have on the outer surface a corresponding thread 6.

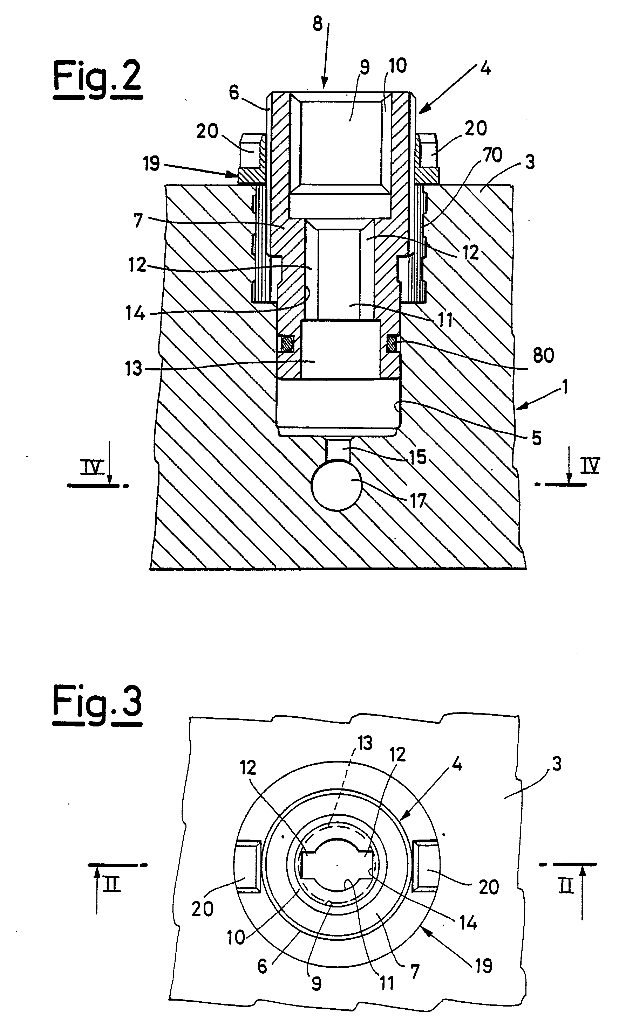

According to the preferred embodiment illustrated in Fig. 2 the thread 70 is not obtained by chip machining, but by pouring a die resin; in this way, indeed, costs of accomplishment are substantially reduced.

Each anchorage means 4 (Fig. 2) has a substantially cylindrical body 7 comprising a passing coaxial hole 8 divided into an upper section 9 with an inner thread 10, a central section 11 with a smaller diameter equipped laterally with two symmetrical cavities 12 and a lower cylindrical section 13 (Fig. 3).

The central section 11 may also have a different shape, as long as it can engage rotationally with an appropriate screwing and unscrewing tool with a complementary shape.

Along the external surface of the lower section 13 there is a sealing gasket 80.

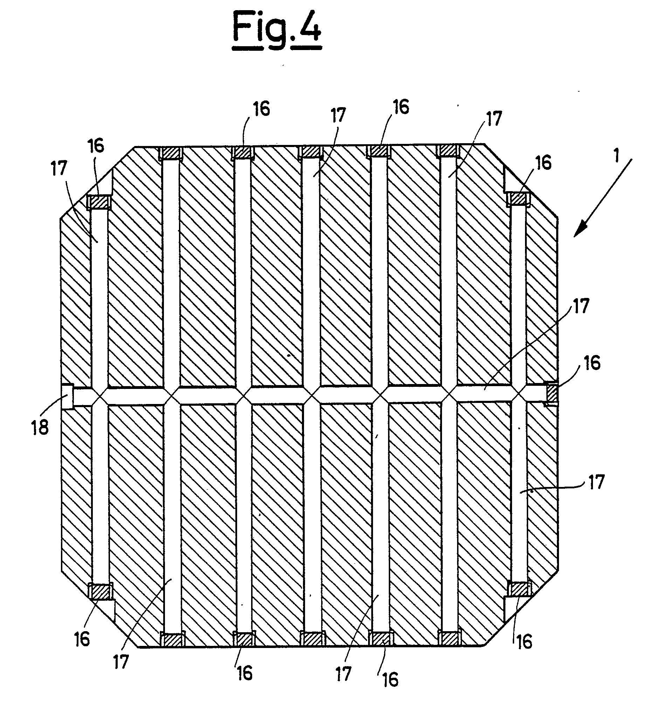

On the bottom of each hole 5 there is a conduit 15 for connecting it to a set of channels 17 which extends in the body of the pallet (Fig. 4) for supplying the fluid to components described later. The channels 17, having the extremities sealed by plugs 16, constitute a single closed circuit with an open inlet 18 for the input of the fluid. As an alternative, there can be several separate circuits into which fluid may be pumped at different pressures.

On the external thread 6 of the anchorage means 4 there is a clamping ring nut 19 which, when tightened, clamps the cylindrical body 7 at any required height and in any angular position. The ring nut 19 has two symmetrical notches 20 which can be engaged by screwing and unscrewing means of the ring nut itself.

With the pallet in the starting position for equipping operations, on the upper extremity of each anchorage means 4 there is already screwed a plug 21 with a gasket 85 to prevent oil issuing under pressure. In Fig. 1, for the sake of clarity, most plugs have been removed.

As shown in Fig.s 5 and 6, each plug 21 is constituted by a lower threaded tang 22 which can be screwed into the upper threaded extremity 9 of the hole 8 and by an upper portion 23 with a larger diameter. The latter has a central cavity 24 and a pair of symmetrical notches 26 along its periphery.

The central cavity 24 has an upper section 66 with symmetrical cavities 25, an enlarged central section 27 and a blind terminal section 65.

Note that, in order to use the same screwing and unscrewing tool for the plug 21 and the ring nut 19, the outer diameter of the plug 21 is the same as that of the ring nut 19 of the anchorage means 4 and the notches 26 are both identical and identically arranged in relation to the notches 20. Moreover the sections 66 and 27 of the cavity 24 of the plug 21 have the same radial dimensions of the central section 11 and of the lower section 13 of the passing hole 8 of the anchorage means 4.

In the anchorage means 4 standard modular components are screwed, such as for example the clamping elements 29, the positioning elements 30 and the intermediate elements 82 shown in Fig.s 8, 9; 10, 11 and 12, 13, respectively and described below.

Each clamping element 29 comprises a body 30 equipped, in its lower part, with a threaded tang 31 which can be screwed into the upper threaded part 9 of the central hole 8 of the anchorage means 4 and, in its upper part, by a clamping bracket 32 which can slide along the vertical axis of the element 29.

The body 30 is hollow and in its cavity 33 there is a mechanism which can cause the translation of the bracket 32, constituted by a series of Belleville washers 34 and by a piston 35.

The cavity 33 communicates with a hole 40 inside the threaded tang 31. A gasket 83 seals the fluid outside the hole 40.

As is known, to operate the element 29, when it is applied to an anchorage means 4, the fluid from the hydraulic power supply is made to rise through the appropriate conduit 15 into the hole 5 and then into the passing hole 8 of the anchorage means 4, from where it reaches the conduit 40 of the clamping element 29 and enters the cavity 33 to raise the piston 35 and cause the corresponding rise of the bracket 32.

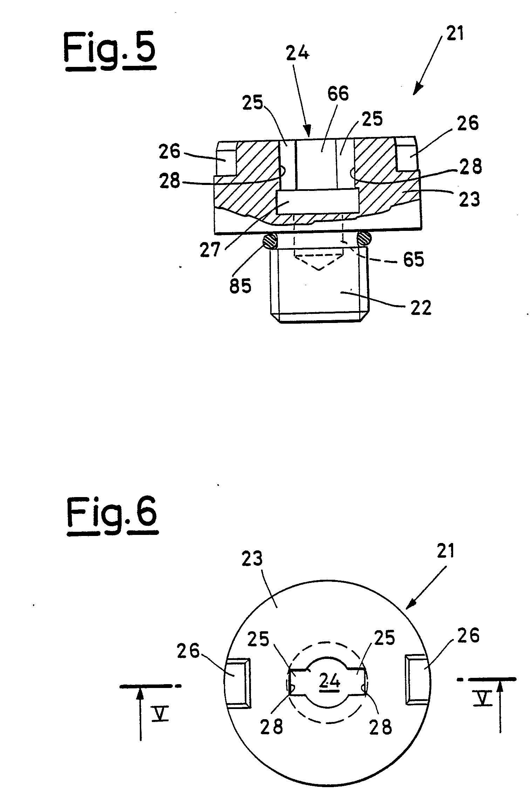

In the bracket 32 there is an axial cavity 41 divided into an upper section 67 with symmetrical lateral cavities 42, an enlarged central section 43 and a lower blind section 68 in all respects identical with those in the plug 21 of Fig. 5.

To the sides of the cavity 41 there are symmetrical notches 44 in turn arranged identically with the notches 26 of the plug 21.

The positioning element 30 (Fig.s 10 and 11) is constituted by a body 45 with, at its lower end, a threaded tang 46 with sealing gasket 86, which can screw into the upper threaded part 9 of the central hole 8 of the anchorage means 4 and, at its upper end, a cavity 47. The latter is divided into an upper section 71 with lateral cavities 48, an enlarged central section 49 and a lower blind section 72 in all respects identical with those on the bracket 32 of the clamping element 29 and on the plug 21.

At the side of said cavity 47 there are two notches 81 which are both identical and identically arranged in relation to the notches 44 of the clamping element 29.

The intermediate element 82 (Fig.s 12 and 13) has a body 50 with, in its lower part, a threaded tang 51 which can be screwed into the upper part 9 of the central 8 of the anchorage means 4 and has a passing hole 53 divided into an upper section 54 with an internal thread 55, a central section 54 with a smaller diameter with lateral cavities 57, an enlarged section 58 and a lower section 59 which extends to the threaded tang 51, where there is a gasket 84.

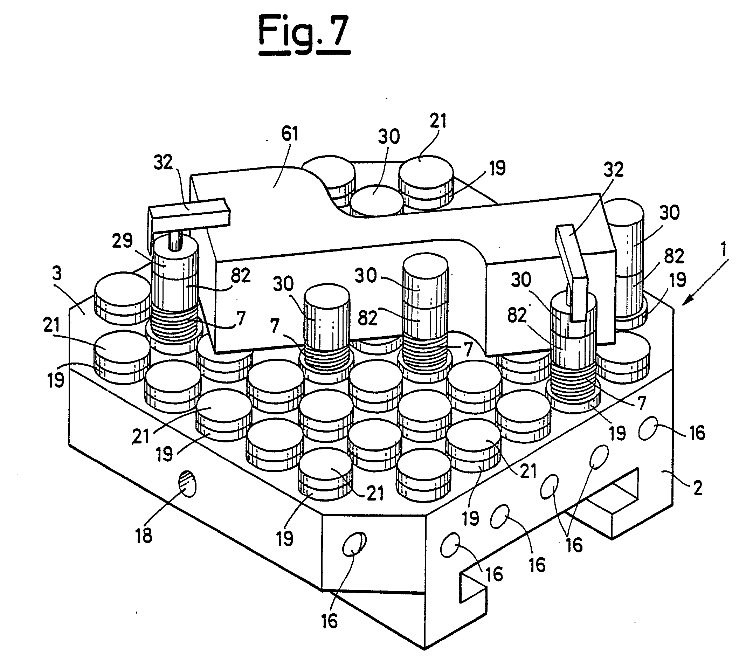

The upper section 54 of the hole 53 is in all respects identical to the upper section 9 of the hole 8 of the anchorage means 4 so that the intermediate element 82 may alternatively receive the tang 31 of a clamping element 29 or the tang 46 of a positioning element 30 or the tang 51 of another intermediate element 82 after being screwed onto an anchorage element 4 as shown in Fig. 7.

To the sides of the passing hole 53 there are two notches 60 identical with the notches 44 of the clamping elements 29 and with the notches 81 of the intermediate elements 82.

Since the plugs 21 and the modular elements 29, 30 and 82 have corresponding cavities 66, 41, 47 and 56, the same tool may be used for clamping them and moving them.

The same tool may also be used for screwing and unscrewing the clamping ring nuts 19, the plugs 21, the clamping elements 29, the positioning elements 30 and the intermediate elements 82, thanks to the cavities 20, 26, 44, 81 and 60.

The shape and the position of the cavities 66, 41, 47 and 56 are illustrated as an example, it being sufficient that they all be the same and that they be the same as the cavity 11 of the anchorage means 4 to permit the use of a single tool for the rotation of the body 7 of the anchorage means 4 and for clamping the plugs 21 and the modular elements 29, 30, 82.

The described pallet, in combination with the plugs 21 and the modular elements 29, 30 and 82, is designed to be used as follows.

Let us say, for example, that the clamping fixture is to be equipped for a rough piece 61 (Fig. 7) of which the identification features are known.

At the start of the equipping operations the pallet, as already said, has all the anchorage elements 4 sealingly closed by the plugs 21.

An operating head with independently rotating tools which can couple with the notches 26 and with the plug's cavity 24, carries out the unscrewing and the removal of a first plug 21 of a selected anchorage means 4.

After unloading the removed plug the operating head adjusts the corresponding anchorage means, loosening the ring nut 19 and screwing or unscrewing the cylindrical body 7 to the required height. Then, holding the body 7 in a fixed position, it tightens the ring nut 19 again clamping the body 7.

At this point, on the adjusted anchorage means, the operating head will screw, by means of its respective threaded tang, an appropriate modular element which may be of the clamping type 29 (Fig.s 8 and 9) or of the positioning type 30 (Fig.s 10 and 11). If the rough piece 61 has a height which is greater than the maximum which can be obtained by using only the available clamping elements 29 and the positioning elements 30, an intermediate element 82 as shown in Fig. 7 is first fastened on the anchorage means 4, after which the element 29 or 30 as required is screwed onto the intermediate element.

The same procedure is followed for other selected anchorages 4 until the clamping fixture is finished.

The operator then commands the transfer of the pallet to a clamping station with an oleodynamic coupling. Fluid under pressure is introduced through the inlet 18 into the network of channels 17 which through the conduits 15 reaches the holes 8 of the anchorage means 4. If the modular elements mounted directly or with intermediate elements 82, on the anchorages 4 without plugs are clamping elements 29, the fluid will act as a means for raising the bracket 32 to permit the positioning of the rough piece among the different components of the clamping fixture.

The oil under pressure is subsequently discharged through the cavities 33 of the clamping elements 29, so that the clamping bracket 32 will clamp against the upper surface of the piece as a result of the action of the washers 34.

The pallet with the mounted piece is now ready to be sent for machining.

## Claims

1. Pallet for equipping the clamping fixture of a rough piece (61) to be machined with machine tools, comprising one or more supporting faces (3) with threaded holes (5), characterized in that in said threaded holes (5) anchorage means (4) adjustable as to height and as to angular orientation for components (29, 30, 82) of said clamping fixture are permanently inserted.

2. Pallet according to claim 1, characterized in that each anchorage means (4) comprises a substantially cylindrical body (7) with an external thread (6) for screwing into the respective threaded hole (5) and an internally threaded coaxial hole (8) for fastening a component (29, 30, 82) of the clamping fixture.

3. Pallet according to claim 2, characterized in that said coaxial hole (8) passes from one extremity to the other of said cylindrical body (7) and communicates with a supply of fluid (17), there being provided fluid sealing means (80) positioned between said cylindrical body (7) and the respective hole (5), as well as a removable sealing plug (21) for closing said coaxial hole (8) when it is not engaged by a component (29, 30, 82) of the clamping fixture.

4. Pallet according to claim 3, characterized in that said supply of fluid consists of a plurality of conduits (17) arranged in the base (2) of the pallet and communicating with at least one fluid inlet (18).

5. Pallet according to claim 2, characterized in that each anchorage means (4) has a locking ring nut (19) screwed onto said external thread (6).

6. Pallet according to claim 2, characterized in that said coaxial hole (8) includes a shaped portion (11) suitable for the introduction and the rotary engagement of a screwing and unscrewing tool shaped in a complementary way.

7. Pallet according to claims 3 and 6, characterized in that said removable plug (21) and said components (29, 30, 82) of the clamping fixture have in their upper part axial holes (24, 41, 47, 53) including a shaped portion (66, 67, 71, 56) suitable for the introduction of said tool and a lower substantially cylindrical enlarged portion (27, 43, 49, 58) to receive said tool and allow its free rotation in order to accomplish an axial engagement suitable for the removal and the movement of the plug (21) and of the component (29, 30, 82) of the clamping fixture, respectively.

8. Pallet according to claims 3, 5 and 7, characterized in that said locking ring nut (19), said plug (21) and said components (29, 30, 82) also have in their upper part a pair of notches (20, 26, 44, 81, 60) appropriate for the rotary engagement with an external complementary part of said screwing and unscrewing tool.

9. Pallet according to claim 3, characterized in that said components (29, 82) of the clamping fixture have internal holes (40, 59) which can be made to communicate with said coaxial hole (8) of a respective anchorage means (4) as a result of their being fastened to the anchorage means (4) itself, there being provided means for liquid seals (83, 84) between said components (29, 82) and the respective anchorage means (4).

10. Pallet according to claim 9, characterized in that said components (29, 30, 82) include intermediate elements (82) with an internal passing hole (59) to accomplish the connection between the coaxial hole (8) of the respective anchorage means (4) and the internal hole (40, 59) of a further component (29, 82) placed above and fastened to it.

# Fig.1

# Fig.2

# Fig.3

# Fig.4

## Fig.5

## Fig.6

# Fig.7

Fig.8

Fig.9

Fig.10

Fig.11

Fig.12

Fig.13